# EUROPEAN PATENT APPLICATION

(11) **EP 2 093 812 A1**
(43) Date of publication of application: **26.08.2009**
(21) Application number: 07831636.1
(22) Date of filing: 12.11.2007
(51) Int. Cl.: H01L 33/00, F21S 8/04, H05B 37/02

(54) **PORTABLE TERMINAL, AND LIGHT EMITTER DRIVE CONTROL METHOD AND LIGHT EMITTER DRIVE CONTROL PROGRAM EMPLOYED IN THE PORTABLE TERMINAL**

(30) Priority: 28.11.2006 JP 2006320284
(71) Applicant: NEC Corporation, Minato-ku Tokyo 108-8001 (JP)
(72) Inventor: KAWATA, Hitomi, Kodama-gun Saitama 367-0241 (JP)
(74) Representative: Betten & Resch
(86) International application number: PCT/JP2007/071906
(87) International publication number: WO 2008/065872

(57) **Abstract**

Windows 49₁, 49₃ each having LED 48₁, 48₂ near the window and a window 49₂ having no LED are disposed alternately and in a row. Pulse width of voltage pulse applied on LEDs 48₁, 48₂ is controlled into the time width corresponding to the brightness. Thereby, the ON/OFF conditions and the brightness of the LEDs 48₁, 48₂ are controlled by the control section 50. Peak of brightness may be changed sequentially at predetermined time intervals from the LED 48₁ at one end to the LED 48₂ at the other end. Light leaked from the three windows 49₁, 49₂, 49₃ look like a flow from one end to the other end. Not only the numbers of parts can be decreased but also the consumed current can be reduced.

## Description

### TECHNICAL FIELD

The present invention relates to a portable terminal, a method of driving control of a light emitting body and a program for driving control of the light emitting body both of which are used for the portable terminal, in particular to the portable terminal in which, like a portable telephone, and the like, usefulness is improved by displaying that the portable terminal is in an operable condition, the method of driving control of the light emitting body and the program for driving control of the light emitting body both of which are used for the portable terminal.

### BACKGROUND TECHNIQUE

In portable terminals such as a portable telephone, and the like, fabricated is a portable terminal having a constitution in which light emitted from an internal light emitting body is leaked outside the portable terminal through a window thereof during operation thereof to direct flow of the light.

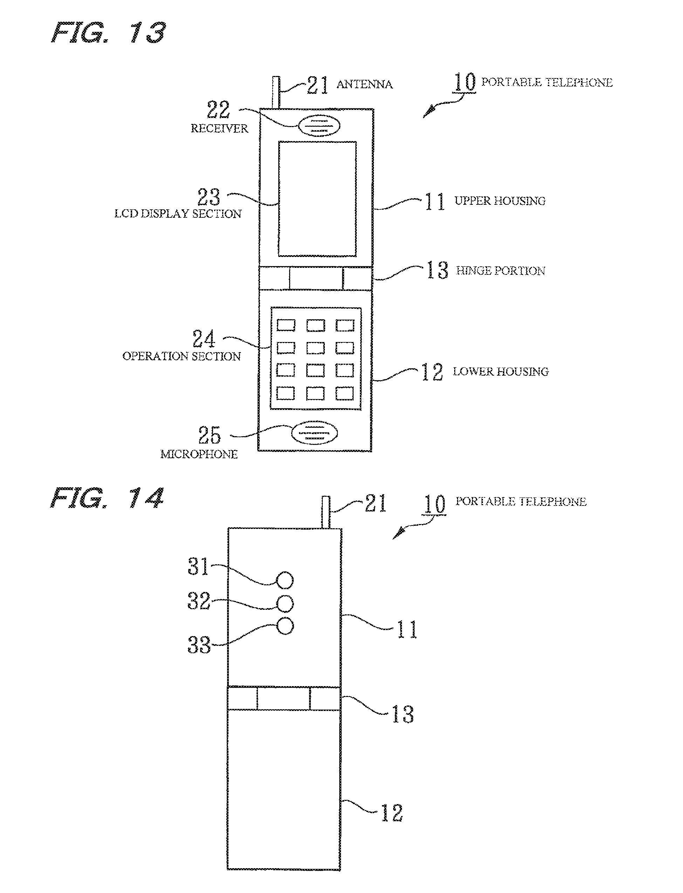

Figs. 13 and 14 are outward appearance views for showing opened conditions of such kinds of portable telephones in a case that their housings are constructed to be folding-type. Fig. 13 is a front view thereof while Fig. 14 is a back view thereof.

As illustrated in Fig. 13, the portable telephone 10 comprises an upper housing 11, a lower housing 12, and a hinge portion 13. The portable telephone 10 is constructed to be folded around the hinge portion 13 in a manner that a front surface of the upper housing 11 and a front surface of the lower housing 12 are facing with each other.

The upper housing 11 is constructed with an outer cover case and an inner cover case being fitted into each other. An antenna 21 is disposed at an upper portion of the upper housing 11. A receiver 22 and an LCD display section 23 are disposed in the inner cover case. The lower housing 12 is constructed with an outer cover case and an inner cover case being fitted into each other. An operation section 24 and a microphone 25 are disposed in the inner cover case.

Further, illustrated in Fig. 14, windows 31, 32 and 33 are disposed in the outer cover case of the upper housing 11. The windows 31, 32 and 33 are constituted, for example, by a transparent resin, glass, or the like. Unillustrated light emitting bodies (for example, LEDs, Light emitting Diodes) are disposed correspondingly one by one with the windows 31, 32 and 33, respectively within the upper housing 11. Light emitted from the LEDs is leaked outside through the windows 31, 32 and 33.

In the portable telephone 10, while the portable telephone 10 is, for example, in calling operation or receiving operation, the LEDs disposed correspondingly with the windows 31, 32 and 33 are put on sequentially one by one and repeatedly. Consequently, it looks like for a user that light leaked out of the windows 31, 32 and 33 flows from one side to the other side, and thereby flow of light is directed.

Other than the above-described portable telephone, such a kind of conventional technique is disclosed, for example, in Patent Reference 1.

In the LED display device disclosed in Patent Reference 1, an LEDR (Red LED), an LEDG (Green LED) and an LEDB (Blue LED) are driven by a PWM (Pulse Width Modulation) control IC using pulses of certain repeated periods. In this case, the PWM control IC is controlled by a CPU, after duty ratio of the above pulses is increased gradually, the maximum duty ratio thereof is held for a certain time. Or else, after duty ratio of the above pulses is decreased gradually, the minimum duty ratio thereof is held for a certain time. Accordingly, the LEDR, the LEDG and the LEDB are brightened gradually or darkened gradually.

Patent Reference 1: Official gazette of Laid open Japanese Patent Application 2004-207411 (Abstract, FIG. 3)

### DISCLOSURE OF THE INVENTION

### PROBLEM TO BE SOLVED BY THE INVENTION

However, the above-described conventional portable telephone has the following problems.

Namely, it is necessary to provide the same number of LEDs as that of the windows 31, 32 and 33 in order that the LEDs disposed correspondingly with the windows 31, 32 and 33 in Fig. 14 may be put on sequentially one by one and repeatedly. This causes a problem that decrease of numbers of parts and reduction of consumed current become difficult.

Further, the LED display device disclosed in Patent Reference 1 does not have a function enabling the light of the LEDR, the LEDG and the LEDB to look like a flow. In addition, the LED display device disclosed in Patent Reference 1 does not decrease the numbers of parts. Therefore, the above problem cannot be solved.

The present invention has been made in view of the above-mentioned circumstances. It is an object of the present invention to provide a portable terminal which is capable of reducing numbers of parts and consumed current and which enables light leaked out of a plurality of windows to look like a flow of light from one side to the other side, a method of driving control of a light emitting body and a program for driving control of the light emitting body both of which are used in the portable terminal.

### MEANS FOR SOLVING THE PROBLEM

In order to solve the above-described problems, an invention as claimed in claim 1 relates to a portable terminal comprising: a plurality of light emitting bodies contained and disposed in a housing with the light emitting bodies being separated from each other; a plurality of windows which are provided in the housing with the windows being separated from each other and which are for leaking light emitted from each light emitting body outside; a light emitting body driving control section which controls the a plurality of light emitting bodies to direct light leaked from the each window as if the light flows from the side of one end of the a plurality of windows to the side of the other end thereof, wherein the invention as claimed in claim 1 is characterized in that the numbers of the windows are larger than those of the light emitting bodies.

An invention as claimed in claim 2 relates to a portable terminal comprising: a plurality of light emitting bodies contained and disposed in a housing with the light emitting bodies being separated from each other and arranged in rows; a plurality of windows which are provided in the housing with the windows being separated from each other and arranged in rows and which are for leaking light emitted from each light emitting body outside; a light emitting body driving control section which controls the a plurality of light emitting bodies to direct light leaked from the each window as if the light flows from the side of one end of the a plurality of windows to the side of the other end thereof, wherein the invention as claimed in claim 2 is characterized in that the numbers of the windows are larger than those of the light emitting bodies.

An invention as claimed in claim 3 relates to a portable terminal as claimed in claim 1 or 2, wherein the each light emitting body is disposed correspondingly one by one with each odd-numbered window counted from the side of one end of the a plurality of windows.

An invention as claimed in claim 4 relates to a portable terminal as claimed in claim 1 or 2, wherein the each light emitting body is disposed correspondingly one by one with each even-numbered window counted from the side of one end of the a plurality of windows.

An invention as claimed in claim 5 relates to a portable terminal as claimed in claim 3 or 4, wherein the light emitting body driving control section controls ON/OFF conditions of the each light emitting body and also controls brightness of the each light emitting body so that a peak of the brightness may be changed sequentially at predetermined time intervals from the light emitting body at the side of one end to the light emitting body at the side of the other end, the light emitting body driving control section directing light leaked from the each window as if the light flows from the side of one end of the a plurality of windows to the side of the other end thereof.

An invention as claimed in claim 6 relates to a portable terminal as claimed in claim 5, wherein the light emitting body driving control section controls brightness of the each light emitting body at predetermined and repeated periods comprised of OFF period → brightness sequentially increasing period → brightness peak period → brightness sequentially decreasing period.

An invention as claimed in claim 7 relates to a portable terminal as claimed in claim 6, wherein the light emitting body driving control section, when brightness of the light emitting body reaches the maximum value, starts increasing brightness of a light emitting body from which light is to be emitted next following to the light emitting body.

An invention as claimed in claim 8 relates to a portable terminal as claimed in claim 5, 6 or 7, wherein the each light emitting body comprises a three colors light emitting element which is consisting of a red light emitting element, a green light emitting element and a blue light emitting element and which is capable of selectively emitting light of at least one of red, green and blue, the light emitting body driving control section selecting at least one of the red light emitting element, the green light emitting element and the blue light emitting element to control brightness of the red light emitting element, the green light emitting element and the blue light emitting element, respectively.

An invention as claimed in claim 9 relates to a portable terminal as claimed in any one of claims 1 through 8, wherein the each light emitting body comprises a light emitting diode.

An invention as claimed in claim 10 relates to a method of driving control of a light emitting body for use in a portable terminal comprising a plurality of light emitting bodies contained and disposed in a housing with the light emitting bodies being separated from each other and a plurality of windows which are provided in the housing with the windows being separated from each other and which are for leaking light emitted from each light emitting body outside, the method comprising the steps of: making the numbers of the windows be larger than those of the light emitting bodies; and controlling the a plurality of light emitting bodies to direct light leaked from the each window as if the light flows from the side of one end of the a plurality of windows to the side of the other end thereof.

An invention as claimed in claim 11 relates to a method of driving control of a light emitting body for use in a portable terminal comprising a plurality of light emitting bodies contained and disposed in a housing with the light emitting bodies being separated from each other and arranged in rows and a plurality of windows which are provided in the housing with the windows being separated from each other and arranged in rows and which are for leaking light emitted from each light emitting body outside, the method comprising the steps of: making the numbers of the windows be larger than those of the light emitting bodies; and controlling the a plurality of light emitting bodies to direct light leaked from the each window as if the light flows from the side of one end of the a plurality of windows to the side of the other end thereof.

An invention as claimed in claim 12 relates to a method of driving control of a light emitting body as claimed in claim 10 or 11, wherein the each light emitting body is disposed correspondingly one by one with each odd-numbered window counted from the side of one end of the a plurality of windows.

An invention as claimed in claim 13 relates to a method of driving control of a light emitting body as claimed in claim 10 or 11, wherein the each light emitting body is disposed correspondingly one by one with each even-numbered window counted from the side of one end of the a plurality of windows.

An invention as claimed in claim 14 relates to a method of driving control of a light emitting body as claimed in claim 12 or 13, the method comprising the steps of: controlling ON/OFF conditions of the each light emitting body; controlling brightness of the each light emitting body; changing a peak of the brightness sequentially at predetermined time intervals from the light emitting body at the side of one end to the light emitting body at the side of the other end; and directing light leaked from the each window as if the light flows from the side of one end of the a plurality of windows to the side of the other end thereof.

An invention as claimed in claim 15 relates to a method of driving control of a light emitting body as claimed in claim 14, further comprising the step of controlling brightness of the each light emitting body at predetermined and repeated periods comprised of OFF period → brightness sequentially increasing period → brightness peak period → brightness sequentially decreasing period.

An invention as claimed in claim 16 relates to a method of driving control of a light emitting body as claimed in claim 15, further comprising the step of: when brightness of the light emitting body reaches the maximum value, starting increase of brightness of a light emitting body from which light is to be emitted next following to the light emitting body.

An invention as claimed in claim 17 relates to a method of driving control of a light emitting body as claimed in claim 14, 15 or 16, further comprising the steps of: making the each light emitting body be constituted by a three colors light emitting element which is consisting of a red light emitting element, a green light emitting element and a blue light emitting element and which is capable of selectively emitting light of at least one of red, green and blue; and selecting at least one of the red light emitting element, the green light emitting element and the blue light emitting element to control brightness of the red light emitting element, the green light emitting element and the blue light emitting element, respectively.

An invention as claimed in claim 18 relates to a program for driving control of the light emitting body, the program making a computer control a portable terminal as claimed in any one of claims 1 through 9.

### EFFECTS OF THE INVENTION

According to the present invention, the numbers of windows for leaking light emitted from each light emitting body outside are larger than those of the light emitting bodies. Consequently, each light emitting body can be controlled by the light emitting body driving control section in a condition that numbers of parts are decreased. In addition, consumed current can be reduced.

Further, the light emitting body driving control section controls ON/OFF conditions of the each light emitting body and also controls brightness of the each light emitting body so that a peak of the brightness may be changed sequentially at predetermined time intervals from the light emitting body at the side of one end to the light emitting body at the side of the other end. Consequently, only by controlling brightness of each light emitting body, the light emitting body driving control section can direct light leaked from the each window as if the light flows from the side of one end of the a plurality of windows to the side of the other end thereof. In addition, the numbers of the light emitting bodies can be smaller than those of windows which are light emitting points when viewed from the outside. Accordingly, not only numbers of parts can be decreased but also consumed current can be reduced.

### BRIEF DESCRIPTION OF THE DRAWINGS

[Fig. 1] A block diagram for showing an electrical constitution of an essential portion of a portable terminal according to a first embodiment of the present invention.
[Fig.2] A view for explaining operation of a control section 50 for controlling brightness of LED 48₁, 48₂.
[Fig.3] A view for showing PWM values, when the control section 50 controls brightness of LED 48₁, 48₂.
[Fig.4] A flow chart for explaining the operation of the control section 50.
[Fig.5] A flow chart for explaining the operation of the control section 50.
[Fig.6] A schematic view for showing change of quantity of light of windows 49₁, 49₂, 49₃.
[Fig.7] A block diagram for showing an electrical constitution of a portable telephone according to a second embodiment of the present invention.
[Fig.8] A view for explaining operation of a control section 50A for controlling brightness of LED 48₁A.
[Fig.9] A view for explaining operation of a control section 50A for controlling brightness of LED 48₂A.
[Fig.10] A view for showing ON/OFF conditions, when the control section 50A controls light emitting colors of LED 48₁A, 48₂A, and PWM values, when the control section 50A controls brightness thereof.
[Fig.11] A flow chart for explaining the operation of the control section 50A.
[Fig. 12] A flow chart for explaining the operation of the control section 50A.
[Fig.13] An outward appearance view for showing a conventional portable telephone.
[Fig.14] An outward appearance view for showing a conventional portable telephone.

### DESCRIPTION OF REFERENCE NUMERALS

- 40, 40A: portable telephone (portable terminal)
- 48, 48A: light emitting section
- 48₁, 48₂: LED(light emitting diode, light emitting body)
- 48₁A, 48₂A: three colors LED(three colors light emitting element)
- 49: window section
- 49₁, 49₂, 49₃: window
- 49b: housing
- 50, 50A: control section (light emitting body driving control section)
- 50a: CPU (Central Processing Unit, computer)
- 50b: ROM (Read Only Memory)

### BEST MODE FOR CARRYING OUT THE INVENTION

Hereunder, referring to the drawings, description will be made about embodiments according to the present invention.

According to the present invention, there are provided a portable terminal in which the numbers of a plurality of windows are larger than those of the light emitting bodies, in which windows each having a light emitting body disposed near the window and another windows each having no light emitting body disposed are located alternately and in a straight line, and in which respective brightness of each of the light emitting bodies are increased or decreased repeatedly at phases different from each other and at a predetermined period, a method of driving control of a light emitting body for use in the portable terminal, and a program for driving control of the light emitting body for use in the same.

### Embodiment 1

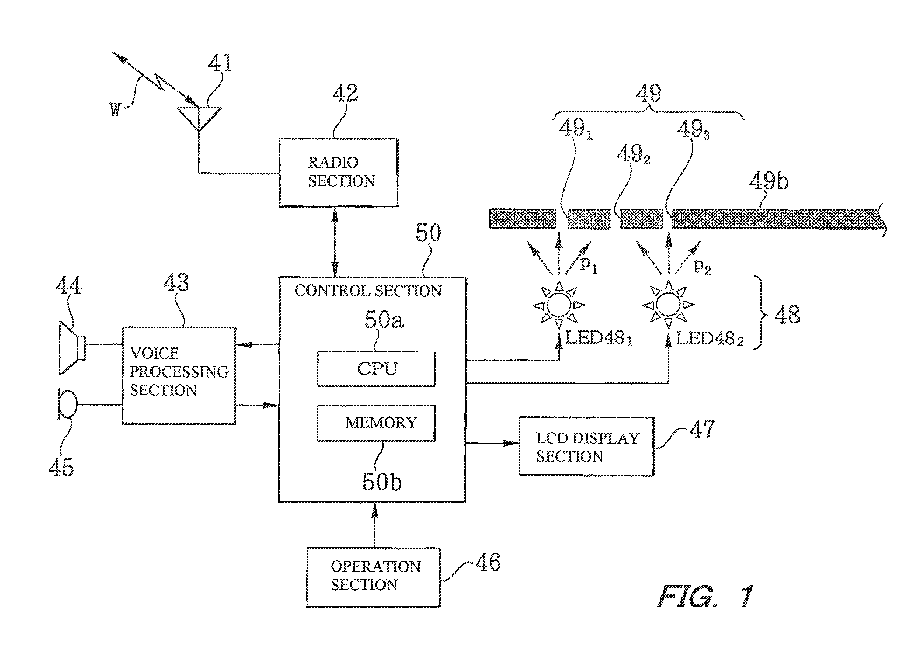

Fig.1 is a block diagram for showing an electrical constitution of an essential portion of a portable terminal according to a first embodiment of the present invention.

As illustrated in Fig. 1, the portable terminal in this embodiment is a portable telephone 40 which comprises an antenna 41, a radio section 42, a voice processing section 43, a receiver 44, a microphone 45, an operation section 46, an LCD display section 47, a light emitting section 48, a window section 49 and a control section 50.

The portable telephone 40 transmits an electric wave w to an unillustrated radio base station and receives the electric wave w therefrom by a control of the control section 50 through the radio section 42 and the antenna 41.

The radio base station is connected to a general telephone line network through unillustrated mobile communication control station, living-in-area mobile communication exchange station and barrier mobile communication exchange station.

The radio section 42 has unillustrated reception circuit, transmission circuit, frequency synthesizer, and the like. The radio section 42 selects a signal frequency to be received from the electric wave w received by the antenna 41. The radio section 42 then converts, amplifies and demodulates the selected signal frequency to produce a received data. The radio section 42 then transfers the received data to the control section 50.

The control section 50 abstracts a voice signal from the received data transferred from the radio section 42 and transfers the voice signal to the voice processing section 43. The voice processing section 43 then digital/analog converts the voice signal to output a voice from the receiver 44.

The receiver 44 produces voices corresponding to various information, such as a ringing melody, a voice during a call, and the like. Further, a voice inputted from the microphone 45 is analog/digital converted by the voice processing section 43. The digital signal is converted by the control section 50 into transmission data. The transmission data is modulated by the radio section 42 and amplified as a carrier wave of a predetermined frequency to be transmitted from the antenna 41.

The operation section 46 comprises a transmission key, a conversion key of English letter/Kana/Kanji/Number, an ON/OFF key of power supply, a cross key for conducting a cursor operation, an end key, and the like.

The control section 50 monitors the operation section 46 and judges an operation by an user to carry out a processing based on the operation. The LCD display section 47 conducts various displays by a control of the control section 50. For example, during a normal voice calling, the LCD display section 47 displays various information such as telephone number information of a calling partner, icon information, and the like.

In Fig. 1, shown is a cross section of a part of the housing 49b provided with the window section 49. The light emitting section 48 has LEDs 48₁, 48₂ contained and disposed in the housing 49b with the LEDs 48₁, 48₂ being separated from each other.

The window section 49 has windows 49₁, 49₂, 49₃ which are provided in the housing 49b with the windows 49₁, 49₂, 49₃ being separated from each other and arranged in rows. The window section 49 leaks light p₁, p₂ emitted from each of the LEDs 48₁, 48₂ outside the housing 49b.

In particular, in this embodiment, the LEDs 48₁, 48₂ are disposed near the odd-numbered windows 49₁, 49₃ correspondingly one by one. On the other hand, no LED is disposed near the window 49₂,

Besides, the housing 49b is constituted, for example, by a folding-type one, similarly to the conventional one illustrated in Figs. 13 and 14, and is corresponding to the outer cover case of the upper housing of the conventional portable terminal. The control section 50 has a CPU(Central Processing Unit) 50a as a computer for controlling a whole of the portable telephone 40 and a ROM(Read Only Memory) 50b in which a program for driving control of the light emitting body for making the CPU 50a be operable is stored.

In particular, in this embodiment, the control section 50 controls ON/OFF conditions and brightness of the LEDs 48₁, 48₂ by controlling a pulse width of a voltage pulse applied on the LEDs 48₁, 48₂ into a time width corresponding to the brightness (Namely, PWM control). In addition, the control section 50 conducts a control that a peak of the brightness will be changed sequentially at predetermined time intervals from the LED 48₁ at the side of one end to the LED 48₂ at the side of the other end. The control section 50 thereby directs a flow of light, as if the light leaked from the windows 49₁, 49₂, 49₃ flow from the side of one end of these windows 49₁, 49₂, 49₃ to the side of the other end thereof.

In this case, the control section 50 controls brightness of the LEDs 48₁, 48₂ in line with the time-axis at predetermined and repeated periods comprised of OFF period → brightness sequentially increasing period → brightness peak period → brightness sequentially decreasing period. The control section 50, when brightness of the LED 48₁ reaches the maximum value, starts increasing brightness of the LED 48₂ from which light is to be emitted next following to the LED 48₁.

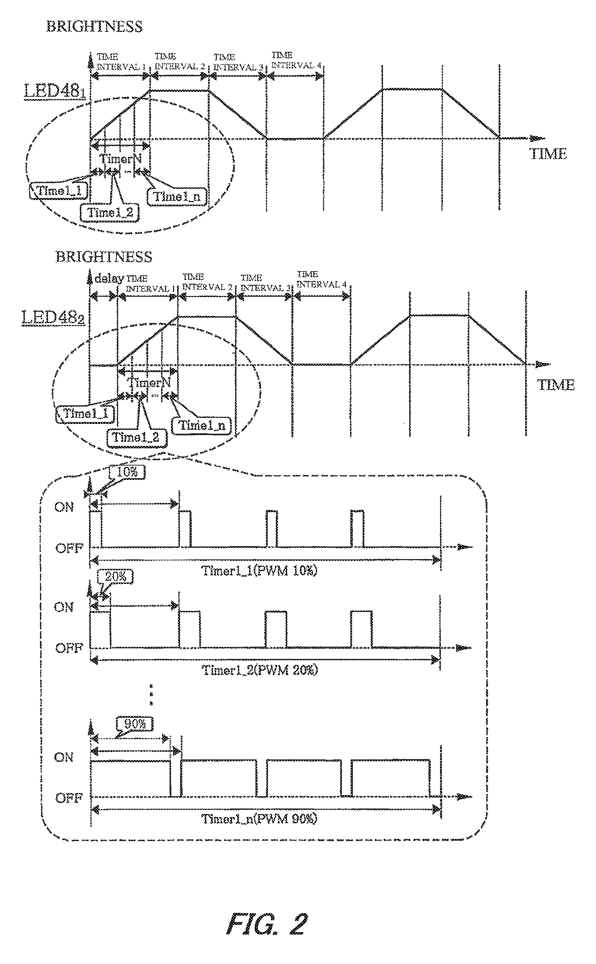

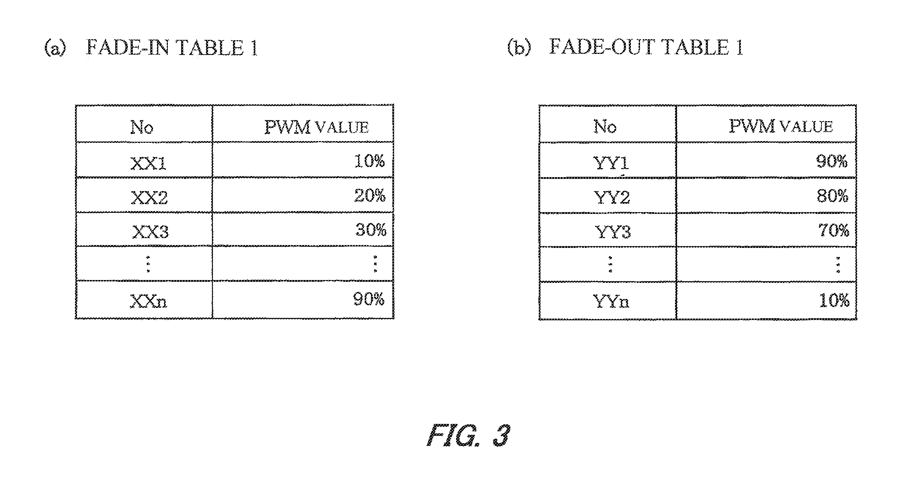

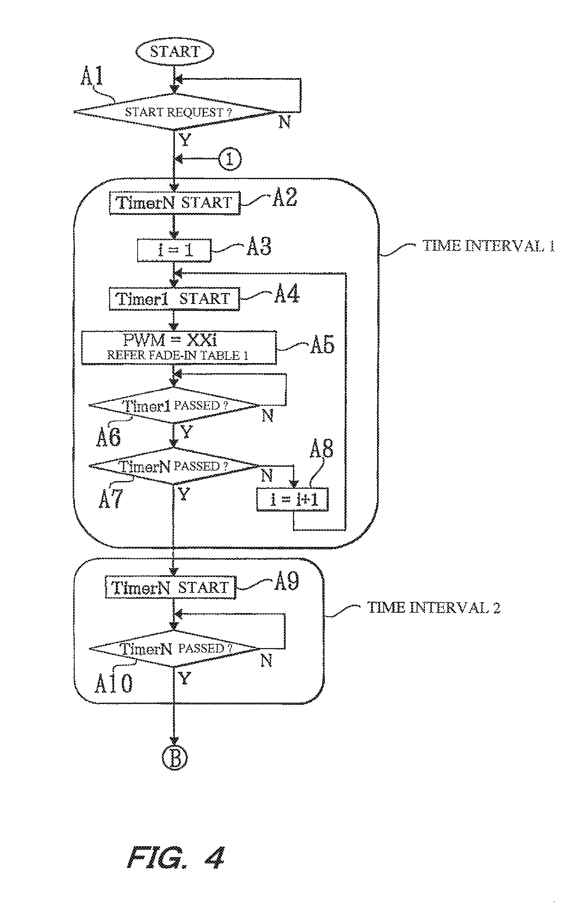

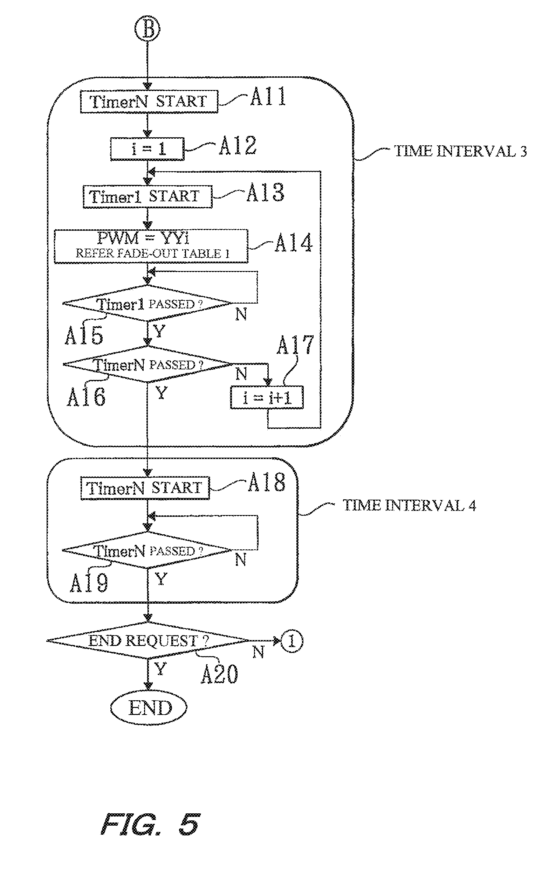

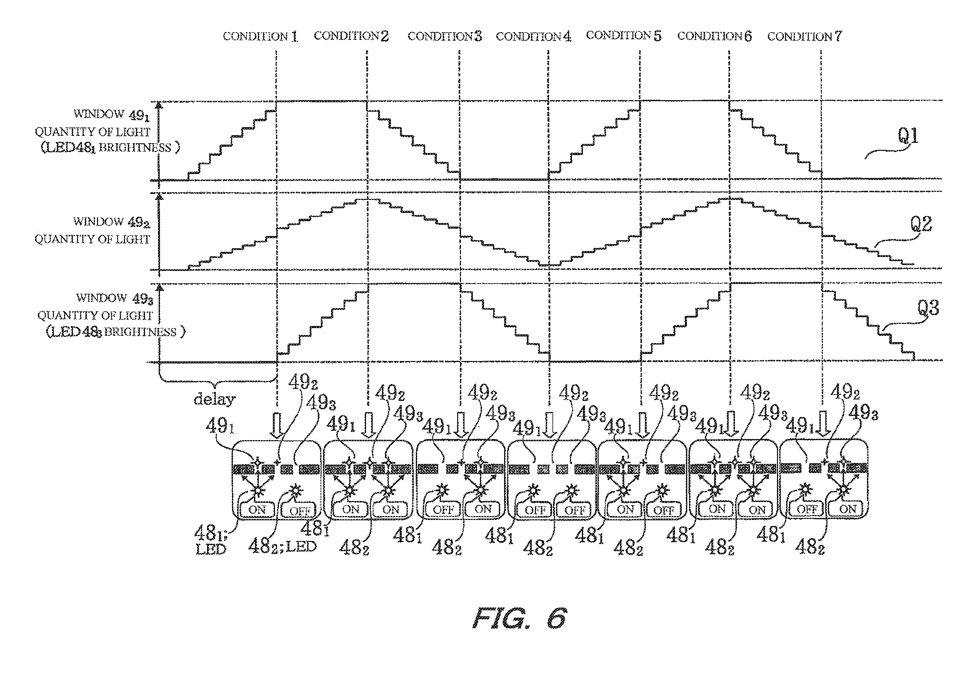

Fig. 2 is a view for explaining operation of the control section 50 for controlling the brightness of the LEDs 48₁, 48₂. Fig.3 is a view for showing PWM values, when the control section 50 controls the brightness of the LEDs 48₁, 48₂. Figs. 4 and 5 are flow charts for explaining the operations of the control section 50. Fig.6 is a schematic view for showing change of quantity of light of the windows 49₁, 49₂, 49₃.

Referring to these drawings, description will be made about contents of processing of a method of driving control of a light emitting body for use in the portable telephone 40 in this embodiment.

In the portable telephone 40, the pulse width of the voltage pulse applied on the LEDs 48₁, 48₂ is controlled by the control section 50 into the time width corresponding to the brightness. Thereby, the ON/OFF conditions and the brightness of the LEDs 48₁, 48₂ are controlled by the control section 50. In addition, a control is conducted by the control section 50 so that a peak of the brightness may be changed sequentially at predetermined time intervals from the LED 48₁ at the side of one end to the LED 48₂ at the side of the other end.

Namely, in the control of the brightness of the LEDs 48₁, 48₂, as illustrated in Fig. 2, one period comprises time interval 1, time interval 2, time interval 3 and time interval 4, respectively. A control of the LED 48₂ is started later than that of the LED 48₁ by a predetermined delay time (Delay).

In each time interval 1, each PWM value corresponding to No. XX1 through No. XXn in a fade-in table 1 shown in Fig. 3(a) is set at a predetermined time unit Timer 1_1 (=Timer 1_2,..., Timer 1_n) (n; natural number). In this case, the PWM value is set gradually from No. XX1 (PWM value; 10%) to No. XXn (PWM value; 90%) in synchronization that the LEDs 48₁, 48₂ are put on. Thereby, the brightness of the LEDs 48₁, 48₂ are gradually increased from the minimum value to the maximum value.

In each time interval 2, the brightness of the LEDs 48₁, 48₂ are held at the maximum value during the time interval (TimerN).

Further, in each time interval 3, each PWM value corresponding to No. YY1 through No. YYn in a fade-out table 1 shown in Fig. 3(b) is set at a predetermined time unit Timer 1_1 (=Timer 1_2,..., Timer 1_n).

In this case, the PWM value is set gradually from No. YY1 (PWM value; 90%) to No. YYn (PWM value; 10%) in synchronization that the LEDs 48₁, 48₂ are put on. Thereby, the brightness of the LEDs 48₁, 48₂ are gradually decreased from the maximum value to the minimum value.

In each time interval 4, the brightness of the LEDs 48₁, 48₂ are held at the minimum value during the time interval (TimerN). Thereafter, similar control for the LEDs 48₁, 48₂ is repeated per each one period.

In this case, in the control section 50, a control in the time interval 1 is started (step A1), as shown in Fig. 4, when a request for putting the light emitting section 48 on is made, for example, when the user made an operation for calling, or when the portable telephone 40 conducts a receiving operation.

In the time interval 1, an operation for setting the PWM value in the fade-in table 1 is repeated every predetermined time (Timer 1) until the predetermined time (Timer N). Namely, Timer N starts in step A2, a parameter i for reference of the fade-in table 1 is initialized in step A3, Timer 1 starts in step A4, and the PWM value of the fade-in table 1 is set in step A5. If Timer 1 has become time out (passed the time limit) in step A6, until Timer N becomes time out in step A7, the parameter i is incremented by "1" in step A8. If Timer N has become time out in step A7, the processing proceeds to the time interval 2.

In the time interval 2, after Timer N starts in step A9, the last PWM value in the time interval 1 is held until Timer N becomes time out in step A10. If Timer N has become time out in step A11, the processing proceeds to the time interval 3.

In the time interval 3, an operation for setting the PWM value in the fade-out table 1 is repeated every predetermined time (Timer 1) until the predetermined time (Timer N), as illustrated in Fig. 5. Namely, Timer N starts in step A11, a parameter i for reference of the fade-out table 1 is initialized in step A12, Timer 1 starts in step A13, and the PWM value of the fade-out table 1 is set in step A14. If Timer 1 has become time out in step A15, until Timer N becomes time out in step A16, the parameter i is incremented in step A17. If Timer N has become time out in step A16, the processing proceeds to the time interval 4.

In the time interval 4, after Timer N starts in step A18, the last PWM value in the time interval 3 is held until Timer N becomes time out in step A19. If Timer N has become time out in step A19, the processing proceeds to step A20. In step A20, the light emitting section 48 is put off, when a request for putting the light emitting section 48 off is made, for example, when the user made an operation for finishing the calling, or when the portable telephone 40 finishes the receiving operation. On the other hand, in step A20, when no request for putting the light emitting section 48 off is made, the processing returns to step A2, and then the control in the above time intervals 1 through 4 is repeated.

By the above-described control, as shown in Fig. 6, quantity of light of windows 49₁, 49₂, 49₃ is changed. Namely, the LED 48₁ becomes bright gradually, as depicted in the brightness Q1, and then maintains high brightness for a certain time, and thereafter becomes dark gradually. After the delay time (Delay) has passed later than the LED 48₁, in other words, when the LED 48₁ reaches the high brightness, brightness of the LED 48₂ is, as depicted in the brightness Q3, changed similarly to that of the LED 48₁. Accordingly, the LED 48₁ becomes bright gradually while the LED 48₂ is being put off from the start of the control to the condition 1. The LED 48₂ becomes bright gradually while the LED 48₁ is kept to be bright from the condition 1 to the condition 2. The LED 48₁ becomes dark gradually while the LED 48₂ is kept to be bright from the condition 2 to the condition 3. The LED 48₂ becomes dark gradually while the LED 48₁ is being put off from the condition 3 to the condition 4. Similar controls are repeated also after the condition 4.

As a result, by a change of the brightness of the LED 48₁, the quantity of light of the window 49₁ is changed in correspondence with the brightness Q1 of the LED 48₁. By a change of the brightness of the LED 48₂, the quantity of light of the window 49₃ is changed in correspondence with the brightness Q3 of the LED 48₂. Responsive to the change of the brightness Q1 of the LED 48₁ and the change of the brightness Q3 of the LED 48₂, the quantity of light of the window 49₂ is changed like the brightness Q2 shown in Fig. 6. Accordingly, the light leaked from the three windows 49₁, 49₂, 49₃ looks like a flow from one end thereof to the other end thereof only by controlling the brightness of the two LEDs 48₁, 48₂.

As described above, in the first embodiment, the numbers of the windows 49₁, 49₂, 49₃ is larger than the numbers of the LEDs 48₁, 48₂. In addition, the windows 49₁, 49₃ near which the LEDs 48₁, 48₂ are disposed, respectively and the window 49₂ near which no LED is disposed are provided alternately and arranged in a row. The ON/OFF conditions and the brightness of the LEDs 48₁, 48₂ disposed one by one in correspondence to the odd-numbered windows 49₁, 49₃ are controlled. In addition, a control is conducted so that a peak of the brightness may be changed sequentially and at predetermined time intervals from the LED 48₁ at the one end side to the LED 48₂ at the other end side. Therefore, the light leaked from the three windows 49₁, 49₂, 49₃ can look like a flow from one end thereof to the other end thereof only by controlling the brightness of the two LEDs 48₁, 48₂, so that the flow of light can be thus directed. In addition, the numbers of the LEDs 48₁, 48₂, as light emitting bodies can be smaller than the numbers of the windows 49₁, 49₂, 49₃ as light emitting points when viewed from the outside. Consequently, not only the numbers of parts can be decreased but also the consumed current can be reduced.

### Embodiment 2

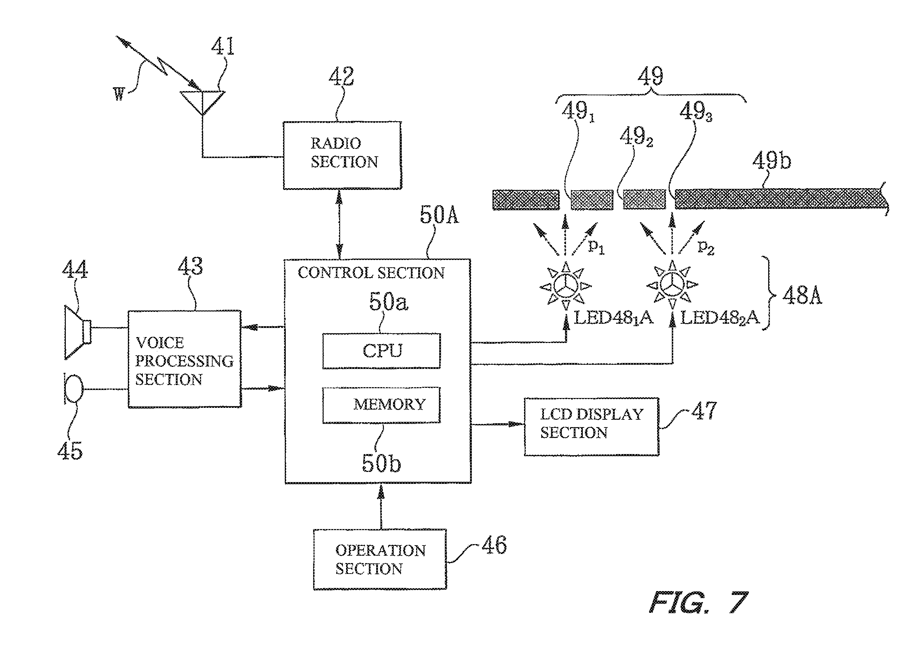

Fig. 7 is a block diagram for showing an electrical constitution of a portable telephone according to a second embodiment of the present invention. Elements in Fig. 7 similar to those of the first embodiment in Fig. 1 are designated by like reference numerals.

As illustrated in Fig. 7, a light emitting section 48A having a different constitution and a control section 50A having a different function are provided in the portable telephone 40A of this embodiment, instead of the light emitting section 48 and the control section 50 in Fig. 1.

Three colors LEDs 48₁A, 48₂A capable of selectively emitting light of at least one of red (R), green (G) and blue (B) are provided in the light emitting section 48A, instead of the LEDs 48₁, 48₂ in Fig. 1. The three colors LED 48₁A and the three colors LED 48₂A are constituted each by a compound of red color LED, green color LED and blue color LED, respectively.

The control section 50A has a function for selecting at least one LED among the red color LED, the green color LED and the blue color LED of the three colors LEDs 48₁A, 48₂A and for repeatedly increasing or decreasing respective brightness thereof at predetermined periods, instead of a function of the control section 50 for controlling the LEDs 48₁, 48₂.

In this case, the control section 50A controls a pulse width of a voltage pulse applied on each the red color LED, each the green color LED and each the blue color LED of the three colors LEDs 48₁A, 48₂A to be a time width corresponding to the brightness thereof (PWM control). Thereby, the brightness of R, G and B of the three colors LEDs 48₁A, 48₂A are increased gradually from the minimum value to the maximum value thereof, and thereafter decreased gradually from the maximum value to the minimum value thereof at phases different from each other and at a predetermined period. Constitutions other than the above are similar to those of Fig. 1.

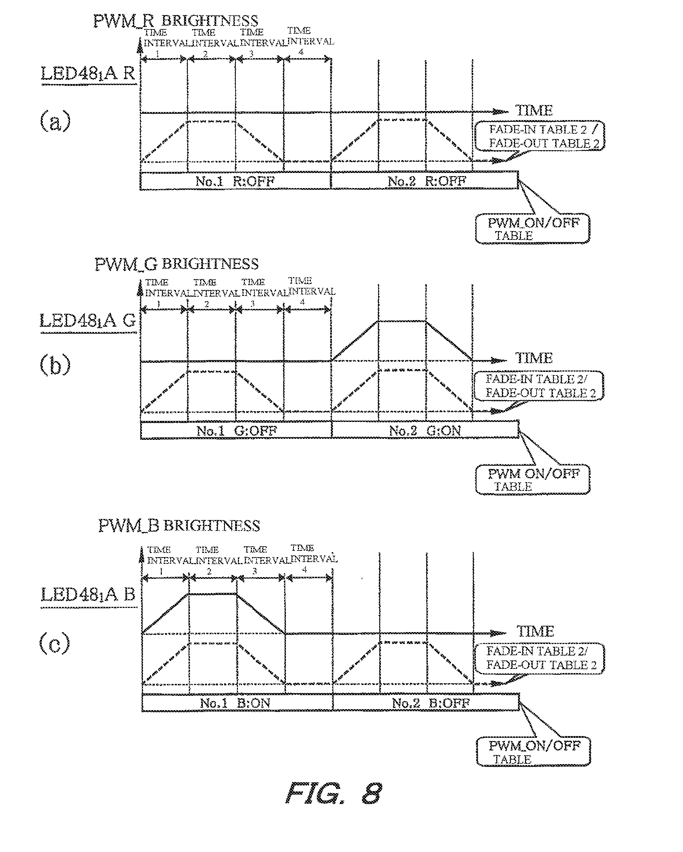

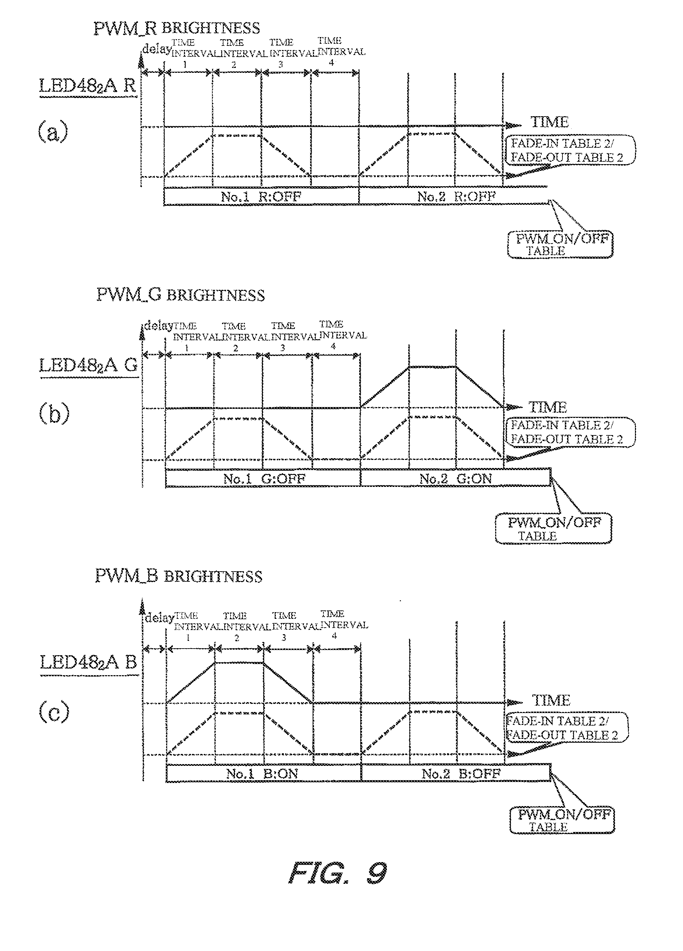

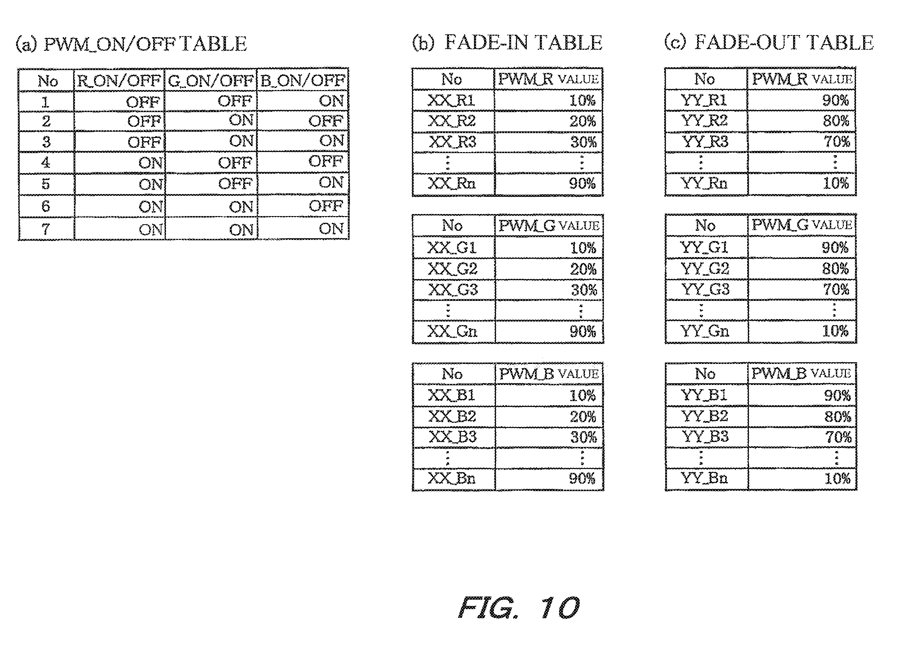

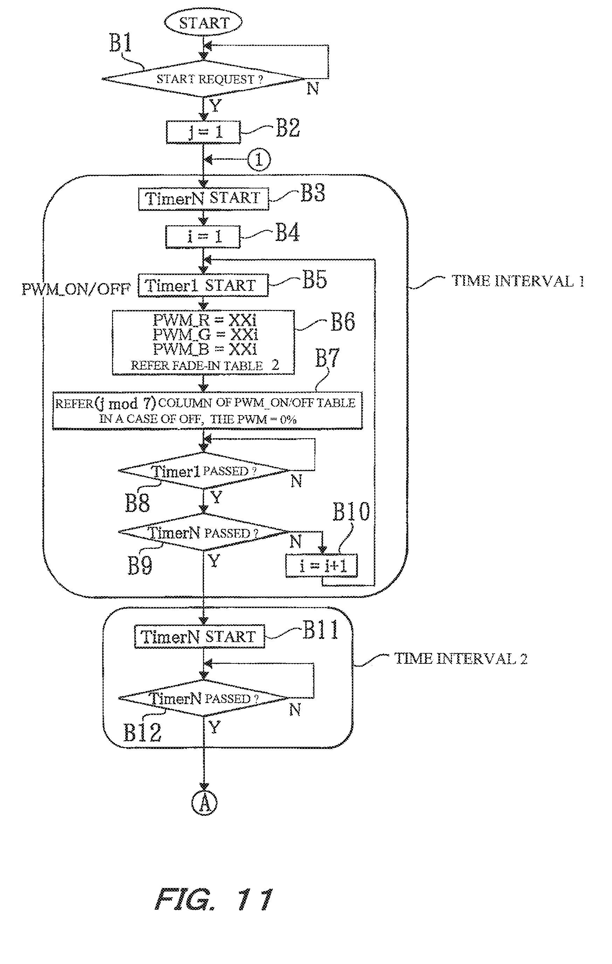

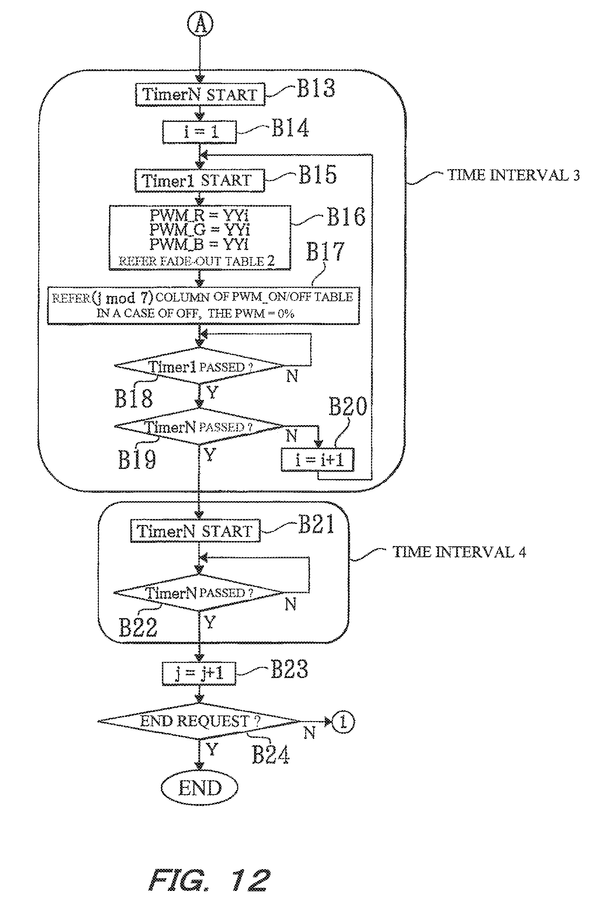

Fig.8 is a view for explaining operation of the control section 50A for controlling brightness of LED 48₁A. Fig.9 is a view for explaining operation of the control section 50A for controlling brightness of LED 48₂A. Fig.10 is a view for showing ON/OFF conditions, when the control section 50A controls light emitting colors of LED 48₁A, 48₂A, and PWM values, when the control section 50A controls brightness thereof. Figs. 11 and 12 are flow charts each for explaining the operation of the control section 50A.

Referring to these drawings, description will be made about contents of processing of a method of controlling emitted light for use in the portable telephone 40A in this embodiment.

In the portable telephone 40A of this embodiment, at least one LED is selected from the red color LED, the green color LED and the blue color LED of the three colors LEDs 48₁A, 48₂A. Respective brightness thereof are repeatedly increased or decreased at predetermined periods.

At first, as illustrated in Fig. 10(a), a PWM_ON/OFF table is set for determining light emitting colors of the three colors LEDs 48₁A, 48₂A.

According to the PWM_ON/OFF table, for example, in No. 1, B (blue) becomes ON condition, so that the three colors LEDs 48₁A, 48₂A are put on by blue color (B).

Further, in No. 5, R (red) and B (blue) become ON condition, so that addition compound color of red and blue makes the three colors LEDs 48₁A, 48₂A. be put on by purple color.

Further, as illustrated in Fig. 10(b), a fade-in table 2 is set for determining a PWM value per each R, G, B at the time of fade-in of the three colors LEDs 48₁A, 48₂A.

Further, as illustrated in Fig. 10(c), a fade-out table 2 is set for determining a PWM value per each R, G, B at the time of fade-out of the three colors LEDs 48₁A, 48₂A.

In a control of ON/OFF conditions and brightness of each color of the three colors LED 48₁A, as shown in Fig. 8, in time interval 1, the fade-in table 2 of Fig. 10 (b) and the PWM_ON/OFF table of Fig. 10 (a) are referred per each R, G, B LED. If the ON condition is set in the PWM_ON/OFF table, brightness is set every predetermined time (Timer 1) based on the PWM value in the fade-in table 2, similarly to the first embodiment. On the other hand, if the OFF condition is set in the PWM_ON/OFF table, the PWM value becomes 0% (Put off condition) in spite of the PWM value in the fade-in table 2.

In time interval 2, the PWM_ON/OFF table is referred per each R, G, B LED. If the ON condition is set in the PWM_ON/OFF table, the brightness of the three colors LED 48₁A is held at the maximum value during the time interval (TimerN), similarly to the first embodiment. On the other hand, if the OFF condition is set in the PWM_ON/OFF table, the PWM value becomes 0% (Put off condition) during the time interval (TimerN).

In time interval 3, the fade-out table 2 of Fig. 10 (c) is referred per each R, G, B LED instead of the fade-in table 2 in the above time interval 1. Thereby, brightness is set.

In time interval 4, the PAW value becomes 0% (Put off condition) in spite of the PWM_ON/OFF table. Thereafter, the control in the above time intervals 1 through 4 is repeated. On the other hand, in a control of ON/OFF conditions and brightness of each color of the three colors LED 48₂A, as shown in Fig. 9, a control of the three colors LED 48₂A is started later than that of the LED 48₁A by a predetermined delay time (Delay). Then, similar controls are repeated.

In this case, in the control section 50A, as shown in Fig. 11, when a request for putting the light emitting section 48A on is made, for example, when the user made an operation for calling, or when the portable telephone 40A conducts a receiving operation (step B1), a parameter j for reference of the PWM_ON/OFF table of Fig. 10 (a) is initialized (j=1). A control in the time interval 1 is then started (step B2).

In the time interval 1, an operation for setting the PWM value calculated by the fade-in table 2 and the PWM_ON/OFF table is repeated every predetermined time (Timer 1) until the predetermined time (Timer N). Namely, Timer N starts in step B3, a parameter i for reference of the fade-in table 2 is initialized (i=1) in step B4, Timer 1 starts in step B5, and the PWM value is set based on the fade-in table 2 in step B6.

Next, in step B7, with respect to the PWM_ON/OFF table, a column corresponding to a rest when the parameter j is divided by seven (jmod 7) is referred. If the column is OFF condition, the PWM value thereof is set to be 0%. In this case, with respect to the PWM value set in step B6, only the corresponding PWM values are set to be 0% again in step B7. If Timer 1 has become time out in step B8, until Timer N becomes time out in step B9, the parameter i is incremented by "1" in step B10. If Timer N has become time out in step B9, the processing proceeds to the time interval 2.

In the time interval 2, after Timer N starts in step B10, the last PWM value in the time interval 1 is held until Timer N becomes time out in step B11. If Timer N has become time out in step B10, the processing proceeds to the time interval 3.

In the time interval 3, an operation for setting the PWM value calculated by the fade-out table 2 and the PWM_ON/OFF table is repeated every predetermined time (Timer 1) until the predetermined time (Timer N), as illustrated in Fig. 12. Namely, Timer N starts in step B13, a parameter i for reference of the fade-out table 2 is initialized (i=1) in step B14, Timer 1 starts in step B15, and the PWM value is set based on the fade-out table 2 in step B16.

Next, in step B17, with respect to the PWM_ON/OFF table, a column corresponding to a rest when the parameter j is divided by seven (jmod 7) is referred. If the column is OFF condition, the PWM value thereof is set to be 0%. In this case, with respect to the PWM value set in step B16, only the corresponding PWM values are set to be 0% again in step B17. If Timer 1 has become time out in step B18, until Timer N becomes time out in step B19, the parameter i is incremented by "1" in step B20. If Timer N has become time out in step B19, the processing proceeds to the time interval 4.

In the time interval 4, after Timer N starts in step B21, the last PWM value in the time interval 3 is held until Timer N becomes time out in step B22. If Timer N has become time out in step B22, the processing proceeds to step B23. In step B23, the parameter j is incremented by "1". In step B24, the light emitting section 48A is put off, when a request for putting the light emitting section 48A off is made, for example, when the user made an operation for finishing the calling, or when the portable telephone 40A finishes the receiving operation. On the other hand, in step B24, when no request for putting the light emitting section 48A off is made, the processing returns to step B3, and then the control in the above time intervals 1 through 4 is repeated.

As described above, although the three colors LEDs 48₁A, 48₂A are provided in the second embodiment, similarly to the first embodiment, the light leaked from the three windows 49₁, 49₂, 49₃ can look like a flow from one end thereof to the other end thereof. In addition, not only the numbers of parts can be decreased but also the consumed current can be reduced. Further, since the three colors LEDs 48₁A, 48₂A are provided in the second embodiment, direction by the flow of light can be more remarkable.

In the above, a detailed description has been made about the embodiments of the present invention with reference to the drawings. However, concrete constitutions of the present invention are not restricted to the embodiments thus described. If alternative designs are made within a scope of the present invention, such alternative designs are included in the present invention.

For example, each PWM value in the fade-in table 1 and the fade-out table 1 shown in Fig. 3 is not restricted to those values in Fig. 3. Further, in Fig. 10(a), the number of combinations of ON/OFF of red (R), green (G), and blue (B) is seven. However, the number of combinations thereof can be smaller than seven. Furthermore, each PWM value in the fade-in table 2 and the fade-out table 2 shown in Figs. 10 (b), (c) is not restricted to those values in Figs. 10 (b), (c). Moreover, the portable terminal is not restricted to a portable telephone. For example, the portable terminal may be PDA (Personal Digital Assistants), or the like. In addition, the housing of the portable telephone 40, 40A is not restricted to a folding-type one. The housing of the portable telephone 40, 40A may be straight-type, slide-type, and the like. Further, in each of the above embodiments, the LEDs 48₁, 48₂ are disposed near the odd-numbered windows 49₁, 49₃, respectively. However, another windows can be provided further, and LEDs can be disposed one by one in correspondence to the even-numbered windows. Also in this case, advantageous effects substantially similar to those of the above embodiments can be obtained (in claim 4 or claim 13). In addition, if many windows are provided, the windows can be disposed like a ring.

### POSSIBILITY FOR INDUSTRIAL USE

The present invention is not restricted to a portable telephone but can be applied to all of electronic equipments having functions that light leaked from a plurality of window sections looks like a flow of light flowing from one end side thereof to the other end side thereof.

## Claims

1. A portable terminal comprising:
a plurality of light emitting bodies contained and disposed in a housing with the light emitting bodies being separated from each other;
a plurality of windows which are provided in said housing with the windows being separated from each other and which are for leaking light emitted from each light emitting body outside;
a light emitting body driving control section which controls said a plurality of light emitting bodies to direct light leaked from said each window as if the light flows from the side of one end of said a plurality of windows to the side of the other end thereof, wherein the invention as claimed in claim 1 is **characterized in that** the numbers of said windows are larger than those of said light emitting bodies.

2. A portable terminal comprising:
a plurality of light emitting bodies contained and disposed in a housing with the light emitting bodies being separated from each other and arranged in rows;
a plurality of windows which are provided in said housing with the windows being separated from each other and arranged in rows and which are for leaking light emitted from each light emitting body outside;
a light emitting body driving control section which controls said a plurality of light emitting bodies to direct light leaked from said each window as if the light flows from the side of one end of said a plurality of windows to the side of the other end thereof, wherein the invention as claimed in claim 2 is **characterized in that** the numbers of said windows are larger than those of said light emitting bodies.

3. A portable terminal as claimed in claim 1 or 2, wherein said each light emitting body is disposed correspondingly one by one with each odd-numbered window counted from the side of one end of said a plurality of windows.

4. A portable terminal as claimed in claim 1 or 2, wherein said each light emitting body is disposed correspondingly one by one with each even-numbered window counted from the side of one end of said a plurality of windows.

5. A portable terminal as claimed in claim 3 or 4, wherein said light emitting body driving control section controls ON/OFF conditions of said each light emitting body and also controls brightness of said each light emitting body so that a peak of said brightness may be changed sequentially at predetermined time intervals from said light emitting body at the side of one end to said light emitting body at the side of the other end, said light emitting body driving control section directing light leaked from said each window as if the light flows from the side of one end of said a plurality of windows to the side of the other end thereof.

6. A portable terminal as claimed in claim 5, wherein said light emitting body driving control section controls brightness of said each light emitting body at predetermined and repeated periods comprised of OFF period → brightness sequentially increasing period → brightness peak period → brightness sequentially decreasing period.

7. A portable terminal as claimed in claim 6, wherein said light emitting body driving control section, when brightness of the light emitting body reaches said maximum value, starts increasing brightness of a light emitting body from which light is to be emitted next following to the light emitting body.

8. A portable terminal as claimed in claim 5, 6 or 7, wherein said each light emitting body comprises a three colors light emitting element which is consisting of a red light emitting element, a green light emitting element and a blue light emitting element and which is capable of selectively emitting light of at least one of red, green and blue, said light emitting body driving control section selecting at least one of said red light emitting element, said green light emitting element and said blue light emitting element to control brightness of said red light emitting element, said green light emitting element and said blue light emitting element, respectively.

9. A portable terminal as claimed in any one of claims 1 through 8, wherein said each light emitting body comprises a light emitting diode.

10. A method of driving control of a light emitting body for use in a portable terminal comprising a plurality of light emitting bodies contained and disposed in a housing with the light emitting bodies being separated from each other and a plurality of windows which are provided in said housing with the windows being separated from each other and which are for leaking light emitted from each light emitting body outside, said method comprising the steps of:
making the numbers of said windows be larger than those of said light emitting bodies; and
controlling said a plurality of light emitting bodies to direct light leaked from said each window as if the light flows from the side of one end of said a plurality of windows to the side of the other end thereof.

11. A method of driving control of a light emitting body for use in a portable terminal comprising a plurality of light emitting bodies contained and disposed in a housing with the light emitting bodies being separated from each other and arranged in rows and a plurality of windows which are provided in said housing with the windows being separated from each other and arranged in rows and which are for leaking light emitted from each light emitting body outside, said method comprising the steps of:
making the numbers of said windows be larger than those of said light emitting bodies; and
controlling said a plurality of light emitting bodies to direct light leaked from said each window as if the light flows from the side of one end of said a plurality of windows to the side of the other end thereof.

12. A method of driving control of a light emitting body as claimed in claim 10 or 11, wherein said each light emitting body is disposed correspondingly one by one with each odd-numbered window counted from the side of one end of said a plurality of windows.

13. A method of driving control of a light emitting body as claimed in claim 10 or 11, wherein said each light emitting body is disposed correspondingly one by one with each even-numbered window counted from the side of one end of said a plurality of windows.

14. A method of driving control of a light emitting body as claimed in claim 12 or 13, said method comprising the steps of:
controlling ON/OFF conditions of said each light emitting body; controlling brightness of said each light emitting body;
changing a peak of said brightness sequentially at predetermined time intervals from said light emitting body at the side of one end to said light emitting body at the side of the other end; and
directing light leaked from said each window as if the light flows from the side of one end of said a plurality of windows to the side of the other end thereof.

15. A method of driving control of a light emitting body as claimed in claim 14, further comprising the step of controlling brightness of said each light emitting body at predetermined and repeated periods comprised of OFF period → brightness sequentially increasing period → brightness peak period → brightness sequentially decreasing period.

16. A method of driving control of a light emitting body as claimed in claim 15, further comprising the step of: when brightness of the light emitting body reaches said maximum value, starting increase of brightness of a light emitting body from which light is to be emitted next following to the light emitting body.

17. A method of driving control of a light emitting body as claimed in claim 14, 15 or 16, further comprising the steps of: making said each light emitting body be constituted by a three colors light emitting element which is consisting of a red light emitting element, a green light emitting element and a blue light emitting element and which is capable of selectively emitting light of at least one of red, green and blue; and selecting at least one of said red light emitting element, said green light emitting element and said blue light emitting element to control brightness of said red light emitting element, said green light emitting element and said blue light emitting element, respectively.

18. A program for driving control of the light emitting body, said program making a computer control a portable terminal as claimed in any one of claims 1 through 9.
